# EUROPEAN PATENT APPLICATION

(11) **EP 3 531 039 A1**
(43) Date of publication of application: **28.08.2019**
(21) Application number: 18775970.9
(22) Date of filing: 26.03.2018
(51) Int. Cl.: F24H 4/02, F24D 3/00, F24H 1/00, F24H 1/18, F24H 9/00, F25B 1/00, F25B 27/00

(54) **HEATING DEVICE AND HEATING METHOD**

(30) Priority: 30.03.2017 JP 2017067578
(71) Applicant: Mitsubishi Heavy Industries Thermal Systems, Ltd., Tokyo 108-8215 (JP)
(72) Inventor: KOSAKA Masatomo, Tokyo 108-8215 (JP); FUJINO Tetsuji, Tokyo 108-8215 (JP); MAENO Masashi, Tokyo 108-8215 (JP)
(74) Representative: Cabinet Beau de Loménie
(86) International application number: PCT/JP2018/011986
(87) International publication number: WO 2018/181101

(57) **Abstract**

This heating devices provided with a valve control unit (43) which operates a switch valve (42) such that, when the temperature of the water (W) at the top of a third hot water tank (6) is greater than or equal to a prescribed temperature, water (W) from the outside is introduced into the third hot water tank (6), and, when the temperature of the water (W) at the top of the third hot water tank (6) falls below a prescribed temperature, introduces water (W) from the outside into a first hot water tank (4).

## Description

### Technical Field

The present invention relates to a heating device and a heating method for heating a heating target liquid.

Priority is claimed on Japanese Patent Application No. 2017-067578 filed on March 30, 2017, the contents of which are incorporated herein by reference.

### Background Art

Water heaters (heating devices) generating hot water and performing water heating are known in the related art. The water heaters include a gas-type water heater performing water heating by gas combustion, an electric water heater performing water heating with an electric heater, and a heat pump-type water heater that has a refrigerant circuit.

In addition, a water heater using a solar collector as disclosed in PTL 1 is known with demands for solar heat use currently on the rise in the interest of energy conservation.

In a case where a solar collector using the natural energy is used for water heating purposes, the amount of available solar heat varies with the weather and time zones. Accordingly, the temperature of the water in a hot water storage tank cannot be kept at a desired temperature in a water heater using only the solar collector. For example, it is known that it is preferable to keep the temperature of the water in a hot water storage tank at 60 degrees or more in order to suppress Legionella breeding and the like. Accordingly, electric heaters or boilers are used in combination with solar collectors for water heaters in general.

### Citation List

### Patent Literature

[PTL 1] Japanese Unexamined Patent Application Publication No. 5775596

### Summary of Invention

### Technical Problem

The use of electric heaters or boilers, however, leads to a problematic decline in efficiency during energy conservation attempts based on the use of solar heat as a water heater heat source.

In this regard, the present invention provides a heating device and a heating method allowing efficiency enhancement to be achieved while a heating target liquid that has a predetermined temperature is obtained.

### Solution to Problem

A heating device according to a first aspect of the present invention includes a first heat exchange part including a first refrigerant circuit in which CO₂ as a first refrigerant circulates while repeating condensation and evaporation, heating a heating target liquid introduced from an inlet, and discharging the heating target liquid from an outlet, a first storage tank storing the heating target liquid and having a lower portion connected to the inlet of the first heat exchange part, a second storage tank storing the heating target liquid, having a lower portion connected to an upper portion of the first storage tank, having an upper portion connected to the outlet of the first heat exchange part, and allowing the heating target liquid having a predetermined temperature to be extracted from the upper portion, a third storage tank storing the heating target liquid and having an upper portion connected to the second storage tank, a second heat exchange part provided in parallel to the first heat exchange part, including a second refrigerant circuit in which a second refrigerant circulates, and heating the heating target liquid in the third storage tank, a switching valve capable of introducing the heating target liquid from an outside into the lower portion of the first storage tank or a lower portion of the third storage tank, and a valve control unit operating the switching valve such that the heating target liquid from the outside is introduced into the third storage tank when the temperature of the heating target liquid in the upper portion of the third storage tank is equal to or higher than the predetermined temperature and the heating target liquid from the outside is introduced into the first storage tank when the temperature of the heating target liquid in the upper portion of the third storage tank is lower than the predetermined temperature.

According to the heating device, the temperature of the heating target liquid in the third storage tank falls in a case where the amount of heat exchange between the second heat exchange part and the heating target liquid is insufficient. At this time, the switching valve is controlled and the heating target liquid from the outside is introduced into the first storage tank without being introduced into the third storage tank once the temperature of the heating target liquid in the upper portion of the third storage tank falls below a predetermined temperature. In the first storage tank, the heating target liquid is heated as a result of heat exchange with the first heat exchange part in which the CO₂ refrigerant circulates. The heat exchange amount at the second heat exchange part may be insufficient in a case where, for example, the second heat exchange part uses natural energy as a heat source. In the present aspect, the shortage of the heat exchange amount can be compensated for by the first heat exchange part, which is a heat pump using a CO₂ refrigerant.

By the switching valve being controlled, the heating target liquid introduced from the first storage tank into the first heat exchange part and heated or the heating target liquid heated in the third storage tank is introduced into the second storage tank from the storage tank selected by the switching valve. As a result, the heating target liquid having a predetermined temperature is stored in the second storage tank. Accordingly, it is possible to extract and use the heating target liquid having a predetermined temperature from the upper portion of the second storage tank without being affected by a variation in heat exchange amount at the second heat exchange part.

In addition, the pre-heat exchange external heating target liquid is introduced into the first storage tank from below, and the heating target liquid from the lower portion of the first storage tank is introduced into the inlet of the first heat exchange part. Here, the heating target liquid in the first storage tank is high in temperature in the upper portion and low in temperature in the lower portion. Accordingly, the low-temperature heating target liquid in the lower portion of the first storage tank is introduced into the first heat exchange part. Here, the heat pump using CO₂ as a refrigerant has a coefficient of performance (COP) increasing as the temperature of the inlet into the heat pump falls. Accordingly, in the present aspect, operation can be performed in a state where the efficiency of the first heat exchange part is high.

The heating device according to a second aspect of the present invention may further include, in the first aspect described above, a first temperature sensor measuring the temperature of the heating target liquid in the first storage tank at a predetermined height position corresponding to the upper portion of the first storage tank, a second temperature sensor measuring the temperature of the heating target liquid in the second storage tank at a predetermined height position in the upper portion of the second storage tank, and an operation control unit controlling operation of the first heat exchange part in accordance with a measured value of the first temperature sensor such that a measured value of the second temperature sensor becomes equal to or greater than the predetermined temperature.

The heating target liquid extracted from the second storage tank can be kept at or above a predetermined temperature at all times by the operation of the first heat exchange part being controlled by the operation control unit as described above.

In the heating device according to a third aspect of the present invention, which is according to the first or second aspect described above, the predetermined temperature may be 60 degrees or more and 90 degrees or less.

It is possible to extract the heating target liquid that a user can use with ease by keeping the temperature of the heating target liquid extracted from the second storage tank at 60 degrees or more and 90 degrees or less. In addition, bacterial development such as Legionella development can be prevented.

In the heating device according to a fourth aspect of the present invention, which is according to the first to third aspects described above, the second heat exchange part may have a solar collector and the heating target liquid in the third storage tank may be heated by the solar collector.

By using solar heat for heat exchange at the second heat exchange part, it is possible to save more energy and further enhance the efficiency of the heating device.

The heating device according to a fifth aspect of the present invention may further include, in the first to fourth aspects described above, a recycle line connected to the first storage tank and allowing the heating target liquid to be introduced into the first storage tank after the heating target liquid is extracted from the second storage tank and used and a flow regulation member disposed above, below, or above and below an opening portion of the recycle line in the first storage tank and protruding from an inner surface of the first storage tank.

The heating target liquid is introduced from the recycle line into the first storage tank with the temperature of the heating target liquid lowered by the heating target liquid being used. At this time, the flow regulation member is capable of regulating the heating target liquid from the recycle line not being stored in the first storage tank and circulating toward the upward-downward direction in the first storage tank as it is without being stirred in the first storage tank.

If it is possible to prevent the heating target liquid from the recycle line from directly flowing downward in the first storage tank, it is possible to avoid the heating target liquid from the recycle line flowing into the inlet of the first heat exchange part as it is. Accordingly, it is possible to prevent a decline in the temperature of the heating target liquid at the inlet of the first heat exchange part and it is possible to avoid a decline in COP at the first heat exchange part.

If it is possible to prevent the heating target liquid from the recycle line from directly flowing upward in the first storage tank, it is possible to avoid the heating target liquid from the recycle line flowing into the second storage tank from the upper portion of the first storage tank as it is. Accordingly, it is possible to avoid the temperature of the heating target liquid extracted from the upper portion of the second storage tank falling below a predetermined temperature.

A heating device according to a sixth aspect of the present invention includes a first heat exchange part including a first refrigerant circuit in which CO₂ as a first refrigerant circulates while repeating condensation and evaporation, heating a heating target liquid introduced from an inlet, and discharging the heating target liquid from an outlet, a first storage tank storing the heating target liquid and having a lower portion connected to the inlet of the first heat exchange part, a second storage tank storing the heating target liquid, having a lower portion connected to an upper portion of the first storage tank, having an upper portion connected to the outlet of the first heat exchange part, and allowing the heating target liquid having a predetermined temperature to be extracted from the upper portion, a recycle line connected to the first storage tank and allowing the heating target liquid to be introduced into the first storage tank after the heating target liquid is extracted from the second storage tank and used, and a flow regulation member disposed above, below, or above and below an opening portion of the recycle line in the first storage tank and protruding from an inner surface of the first storage tank.

According to the heating device, the flow regulation member is capable of regulating the heating target liquid from the recycle line not being stored in the first storage tank and circulating toward the upward-downward direction in the first storage tank as it is without being stirred in the first storage tank. Accordingly, it is possible to prevent a decline in the temperature of the heating target liquid at the inlet of the first heat exchange part and it is possible to avoid a decline in COP at the first heat exchange part. In addition, it is possible to avoid the heating target liquid from the recycle line flowing into the second storage tank from the upper portion of the first storage tank as it is and it is possible to avoid the temperature of the heating target liquid extracted from the upper portion of the second storage tank falling below a predetermined temperature.

In the heating device according to a seventh aspect of the present invention, which is according to the fifth or sixth aspect described above, the flow regulation member may include a height direction regulation portion disposed above, below, or above and below the opening portion and a facing direction regulation portion continuous with the height direction regulation portion inside the first storage tank and facing the opening portion.

It is possible to avoid the heating target liquid from the recycle line flowing toward the lower part of the first storage tank and flowing into the first heat exchange part as it is and it is possible to avoid the heating target liquid from the recycle line flowing toward the upper part of the first storage tank and flowing into the second storage tank from the upper part as it is by means of the height direction regulation portion of the flow regulation member. Further, it is possible to cause the heating target liquid from the recycle line to collide with the facing direction regulation portion and it is possible to diffuse the heating target liquid from the recycle line in the first storage portion. Accordingly, the heating target liquid from the recycle line can be sufficiently heated in the first storage tank.

A heating method according to an eighth aspect of the present invention is a heating method for heating a heating target liquid with a device, the device including a first heat exchange part including a first refrigerant circuit in which CO₂ as a first refrigerant circulates while repeating condensation and evaporation, heating the heating target liquid introduced from an inlet, and discharging the heating target liquid from an outlet, a first storage tank storing the heating target liquid and having a lower portion connected to the inlet of the first heat exchange part, a second storage tank storing the heating target liquid, having a lower portion connected to an upper portion of the first storage tank, having an upper portion connected to the outlet of the first heat exchange part, and allowing the heating target liquid having a predetermined temperature to be extracted from the upper portion, a third storage tank storing the heating target liquid and having an upper portion connected to the second storage tank, and a second heat exchange part provided in parallel to the first heat exchange part, including a second refrigerant circuit in which a second refrigerant circulates, and heating the heating target liquid in the third storage tank. The heating method includes a step of causing the heating target liquid from an outside to be introduced into the third storage tank when the temperature of the heating target liquid in the third storage tank is equal to or higher than the predetermined temperature and the heating target liquid from the outside to be introduced into the first storage tank when the temperature of the heating target liquid is lower than the predetermined temperature.

According to the heating method, although the heat exchange amount at the second heat exchange part may be insufficient in a case where the second heat exchange part uses natural energy as a heat source, the shortage of the heat exchange amount can be compensated for by the first heat exchange part, which is a heat pump using a CO₂ refrigerant. It is possible to extract and use the heating target liquid having a predetermined temperature from the upper portion of the second storage tank without being affected by a variation in heat exchange amount at the second heat exchange part.

In addition, the pre-heat exchange heating target liquid from the outside is introduced into the first storage tank from below, and the heating target liquid from the lower portion of the first storage tank is introduced into the inlet of the first heat exchange part. Accordingly, the low-temperature heating target liquid in the lower portion of the first storage tank is introduced into the first heat exchange part. Accordingly, in the present aspect, the COP of the first heat exchange part can be increased and operation can be performed in a high-efficiency state.

The heating method according to a ninth aspect of the present invention may further include, in the eighth aspect, a step of controlling operation of the first heat exchange part in accordance with the temperature of the heating target liquid in the first storage tank at a predetermined height position in the upper portion of the first storage tank such that the temperature of the heating target liquid in the second storage tank becomes equal to or higher than the predetermined temperature.

The heating target liquid extracted from the second storage tank can be kept at a predetermined temperature at all times by the operation of the first heat exchange part being controlled in accordance with the temperature of the heating target liquid in the first storage tank.

### Advantageous Effects of Invention

According to the heating device and the heating method described above, it is possible to obtain a heating target liquid that has a predetermined temperature and achieve efficiency enhancement as the first heat exchanger can be operated under optimal operating conditions.

### Brief Description of Drawings

Fig. 1 is an overall configuration diagram of a water heating device of a first embodiment of the present invention.
Fig. 2 is an overall configuration diagram of a water heating device of a second embodiment of the present invention.
Fig. 3 is a side view of a first hot water storage tank in the second embodiment of the present invention.
Fig. 4 is a perspective view illustrating a flow regulation member in the second embodiment of the present invention.
Fig. 5 is a perspective view illustrating a flow regulation member in a first modification example of the second embodiment of the present invention.
Fig. 6 is a perspective view illustrating a flow regulation member in a second modification example of the second embodiment of the present invention.
Fig. 7 is an overall configuration diagram of a water heating device of a third embodiment of the present invention.

### Description of Embodiments

### [First Embodiment]

Hereinafter, a water heating device (heating device) 1 of an embodiment of the present invention will be described.

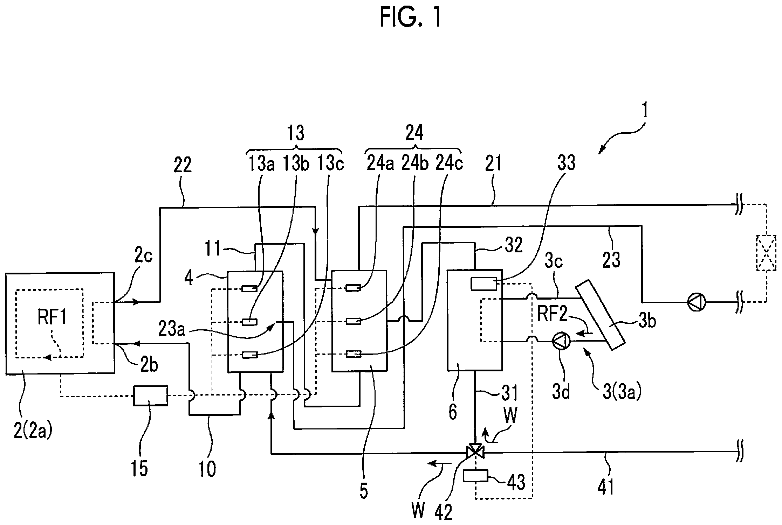

As illustrated in Fig. 1, the water heating device 1 of the present embodiment is provided with a first heat exchange part 2 and a second heat exchange part 3 provided in parallel, a first hot water storage tank (first storage tank) 4 storing water (heating target liquid) W performing heat exchange with the first heat exchange part 2, a third hot water storage tank (third storage tank) 6 storing the water W performing heat exchange with the second heat exchange part 3, and a second hot water storage tank (second storage tank) 5 connected between the first hot water storage tank (first storage tank) 4 and the third hot water storage tank (third storage tank) 6.

The first heat exchange part 2 has a first refrigerant circuit 2a in which CO₂ (carbon dioxide) circulates as a first refrigerant RF1. The first refrigerant circuit 2a is a heat pump having a compressor (not illustrated), a heat exchanger, piping 3c, and the like. CO₂ circulates in the first refrigerant circuit 2a while repeating condensation and evaporation. The water W is heated and discharged from an outlet 2c after the water W is introduced from an inlet 2b of the first heat exchange part 2.

The first hot water storage tank 4 stores the water (hot water) W. A first outlet pipe 10 is connected to the lower portion of the first hot water storage tank 4. The first outlet pipe 10 is connected to the inlet 2b of the first heat exchange part 2. The water W that is cold and the water (hot water) W that is warm are stored in the lower and upper portions in the first hot water storage tank 4, respectively. Accordingly, the water W that has a relatively low temperature is introduced from the first outlet pipe 10 to the inlet 2b of the first heat exchange part 2. A first connection pipe 11 is connected to the upper portion of the first hot water storage tank 4. The water (hot water) W that has a relatively high temperature flows out from the first connection pipe 11.

A supply pipe 41 is provided below the first hot water storage tank 4 so that the water W can be introduced from an external water W supply source (such as a water supply (not illustrated)).

A first temperature sensor 13 is provided on the side wall surface of the first hot water storage tank 4. A plurality of the first temperature sensors 13 (three in the present embodiment) are provided at intervals in the height direction. The three first temperature sensors 13 are referred to as an upper first temperature sensor 13a, a middle first temperature sensor 13b, and a lower first temperature sensor 13c. The number of the first temperature sensors 13 and the positions of disposition of the first temperature sensors 13 can be appropriately set in accordance with operating conditions and the structure of the first hot water storage tank 4.

The second hot water storage tank 5 stores the water (hot water) W. The first connection pipe 11 connected to the upper portion of the first hot water storage tank 4 is connected to the lower portion of the second hot water storage tank 5. As a result, the water (hot water) W that has a relatively high temperature is capable of flowing into the first hot water storage tank 4 from the second hot water storage tank 5. A second inlet pipe 22 is connected to the second hot water storage tank 5. The second inlet pipe 22 is connected to the outlet 2c of the first heat exchange part 2. As a result, the water (hot water) W is introduced into the second hot water storage tank 5 from the upper portion of the second hot water storage tank 5 after the water (hot water) W is heated at the first heat exchange part 2.

A water intake pipe 21 is connected to the upper portion of the second hot water storage tank 5 so that the water (hot water) W in the second hot water storage tank 5 can be extracted and used. The second hot water storage tank 5 is provided with a recycle line 23, which is a pipeline, so that the water (hot water) W extracted from the water intake pipe 21 and used is capable of flowing into the second hot water storage tank 5. In the present embodiment, the recycle line 23 is connected to the side wall surface of the second hot water storage tank 5 and open to the inner portion of the second hot water storage tank 5.

A second temperature sensor 24 is provided on the side wall surface of the second hot water storage tank 5. A plurality of the second temperature sensors 24 (three in the present embodiment) are provided at intervals in the height direction. The three second temperature sensors 24 are referred to as an upper second temperature sensor 24a, a middle second temperature sensor 24b, and a lower second temperature sensor 24c. The number of the second temperature sensors 24 and the positions of disposition of the second temperature sensors 24 can be appropriately set in accordance with operating conditions and the structure of the second hot water storage tank 5.

An operation control unit 15 including an MPU or the like is connected to the first temperature sensor 13 and the second temperature sensor 24. The operation control unit 15 acquires measured values (temperature of the water W) at the first temperature sensor 13 and the second temperature sensor 24 and performs operation control (such as compressor rotation speed control) on the first heat exchange part 2 on the basis of the measured values. Specifically, the operation control unit 15 operates the first heat exchange part 2 in a case where the measured value of the upper first temperature sensor 13a is less than a predetermined first temperature. In other words, the operation control unit 15 maintains a state where the measured values (temperature of the water W) of the upper second temperature sensor 24a, the middle second temperature sensor 24b, and the lower second temperature sensor 24c are equal to or greater than a predetermined temperature without exception (operation control step).

Although the "predetermined temperature" may be 60 degrees or more and 90 degrees or less, the "predetermined temperature" may be a temperature of at least 60 degrees.

The second heat exchange part 3 is provided independently of the first heat exchange part 2. In the present embodiment, the second heat exchange part 3 has the piping 3c through which brine (antifreeze) or the like circulates as a second refrigerant RF2, a solar collector 3b heating the second refrigerant, and a second refrigerant circuit 3a having a pump 3d pumping the second refrigerant RF2.

The third hot water storage tank 6 stores the water (hot water) W. A third inlet pipe 31 is connected to the lower portion of the third hot water storage tank 6. The third inlet pipe 31 is provided so as to branch from the supply pipe 41, and the water W from the supply source (water supply) can be introduced from the lower portion of the third hot water storage tank 6. The third hot water storage tank 6 performs heat exchange with the second refrigerant RF2 of the second heat exchange part 3 and is heated by solar heat. The water W that is cold and the water (hot water) W that is warm are stored in the lower and upper portions in the third hot water storage tank 6, respectively. A second connection pipe 32 is connected to the upper portion of the third hot water storage tank 6. The second connection pipe 32 is connected to the second hot water storage tank 5. The water (hot water) W that has a relatively high temperature flows out from the second connection pipe 32 toward the second hot water storage tank 5.

A third temperature sensor 33 is provided on the side wall surface of the upper portion of the third hot water storage tank 6. The position of disposition of the third temperature sensor 33 can be appropriately set in accordance with operating conditions and the structure of the third hot water storage tank 6.

A switching valve 42 such as a three-way valve is provided at the part of the third inlet pipe 31 that branches from the supply pipe 41. A valve control unit 43 including an MPU or the like is connected to the switching valve 42.

The switching valve 42 is capable of selectively introducing the water W circulating via the supply pipe 41 from the supply source into the third hot water storage tank 6 or the first hot water storage tank 4.

Specifically, the valve control unit 43 causes the water W from the supply source to be introduced into the third hot water storage tank 6 when the temperature of the water (hot water) W in the third hot water storage tank 6 is equal to or higher than the predetermined temperature. When the temperature of the water (hot water) W in the third hot water storage tank 6 is lower than the predetermined temperature, the valve control unit 43 operates the switching valve 42 such that the water W from the supply source is introduced into the first hot water storage tank 4 (introduction step).

According to the water heating device 1 of the present embodiment described above, the temperature of the water W in the third hot water storage tank 6 falls in a case where the available heat quantity at the second heat exchange part 3 utilizing natural energy is insufficient and the amount of heat exchange with the water W is insufficient. Then, the switching valve 42 is operated by the valve control unit 43 such that the temperature of the water W in the third hot water storage tank 6 (measured value at the third temperature sensor 33) does not fall below a predetermined temperature and the water W from the external supply source can be introduced into the first hot water storage tank 4 without being introduced into the third hot water storage tank 6.

In this case, the water W in the first hot water storage tank 4 is caused to exchange heat with the first heat exchange part 2 in which the first refrigerant RF1, which is CO₂, circulates. The water W is heated as a result, and then the water W is introduced into the second hot water storage tank 5. Accordingly, even when the heat exchange amount at the second heat exchange part 3 is insufficient, it is possible to store the water W in the second hot water storage tank 5 after heating the water W by using the first heat exchange part 2, which is a heat pump using a CO₂ refrigerant, such that the shortage of the heat exchange amount is covered.

Subsequently selected is whether to store the heated water (hot water) W in the first hot water storage tank 4 in the upper portion of the second hot water storage tank 5 from the outlet 2c of the first heat exchange part 2 or to push out the water (hot water) W heated in the third hot water storage tank 6 from the upper portion of the third hot water storage tank 6 and introduce the water into the second hot water storage tank 5. As a result, the water (hot water) W having a predetermined temperature is stored in the second hot water storage tank 5. As a result, the water W (hot water) W having the predetermined temperature can be extracted from the upper portion of the second hot water storage tank 5 and used without being affected by a variation in heat exchange amount at the second heat exchange part 3.

The pre-heat exchange water W from the external supply source is introduced into the first hot water storage tank 4 from below, and the water W from the lower portion of the first hot water storage tank 4 is introduced into the inlet 2b of the first heat exchange part 2. The water (hot water) W in the first hot water storage tank 4 is high in temperature in the upper portion and low in temperature in the lower portion. Accordingly, the low-temperature water W in the lower portion of the first hot water storage tank 4 is introduced into the first heat exchange part 2. The heat pump using the CO₂ refrigerant has a COP increasing as the temperature of the inlet 2b falls. Accordingly, the CO₂ water heater of the present embodiment can be operated in a state where the efficiency of the first heat exchange part 2 is high.

The temperature of the water W extracted from the second hot water storage tank 5 can be kept at a predetermined temperature at all times by the operation of the first heat exchange part 2 being controlled by the operation control unit 15. For example, it is possible to extract the water (hot water) W that a user can use with ease by keeping the temperature of the water (hot water) W extracted from the second hot water storage tank 5 at 60 degrees or more and 90 degrees or less. In addition, bacterial development such as Legionella development can be prevented.

### [Second Embodiment]

Next, a water heating device 1A of a second embodiment of the present invention will be described. In the following description of the second embodiment, parts identical to those of the first embodiment are denoted by the same reference numerals so that the same description is not repeated. The second embodiment is different from the first embodiment in that a flow regulation member 51 is provided in the first hot water storage tank 4 in addition to the configuration of the first embodiment.

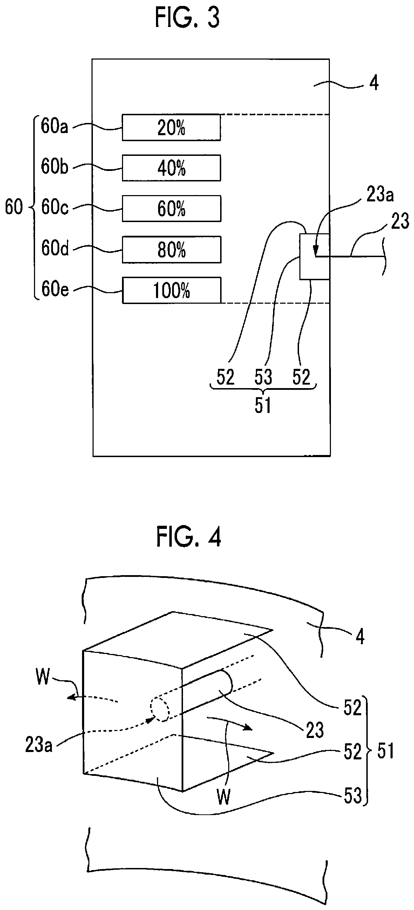

In the present embodiment, a plurality of hot water storage amount detection sensors 60 are provided at intervals in the height direction on the side wall surface of the first hot water storage tank 4. In the present embodiment, five hot water storage amount detection sensors 60 (60a, 60b, 60c, 60d, and 60e) are provided, by the 20% downward, up to the height position where the amount of hot water storage reaches 100% from 20% (see Fig. 3).

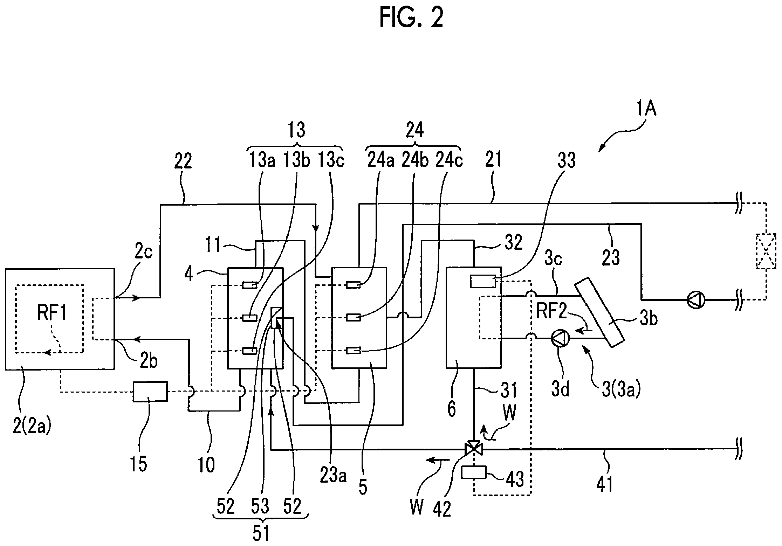

As illustrated in Figs. 2 to 4, the flow regulation member 51 is provided in the first hot water storage tank 4 so as to protrude from the inner surface of the side wall of the first hot water storage tank 4 correspondingly to the position where the recycle line 23 is connected.

More specifically, the flow regulation member 51 has a height direction regulation portion 52 disposed above and below an opening portion 23a of the recycle line 23 toward the first hot water storage tank 4 and a facing direction regulation portion 53 provided continuously with the height direction regulation portion 52.

The recycle line 23 is provided so as to protrude into the first hot water storage tank 4 through, for example, the side wall surface of the first hot water storage tank 4.

The height direction regulation portion 52 has a plate shape. A pair of the height direction regulation portions 52 are provided along the direction of extension of the recycle line 23 so as to sandwich the opening portion 23a of the recycle line 23 from above and below. The height direction regulation portion 52 below the opening portion 23a is disposed above the hot water storage amount detection sensor 60e at the height position of 100%. The height direction regulation portion 52 above the opening portion 23a is disposed below the hot water storage amount detection sensor 60a at the height position of 20%.

The facing direction regulation portion 53 has a plate shape extending in the height direction and interconnects the pair of height direction regulation portions 52 inside the first hot water storage tank 4. The facing direction regulation portion 53 has a surface facing the inner surface of the side wall of the first hot water storage tank 4 so as to face the outflow direction of the water W flowing out from the recycle line 23 (width direction of the first hot water storage tank 4 in the present embodiment).

According to the water heating device 1A of the present embodiment described above, the height direction regulation portion 52 of the flow regulation member 51 is capable of regulating the temperature-lowered water W from the recycle line 23 heading upward or downward as it is without being stored in the first hot water storage tank 4 and flowing out from the first hot water storage tank 4.

Accordingly, it is possible to prevent the water W from the recycle line 23 from being directly introduced into the inlet 2b of the first heat exchange part 2, and thus it is possible to avoid an increase in the temperature of the water W at the inlet 2b of the first heat exchange part 2 in a case where the temperature of the water W from the recycle line 23 is higher than the temperature of the water W from the external supply source and it is possible to avoid a decline in the COP of the first heat exchange part 2.

In addition, it is possible to avoid the water W from the recycle line 23 that has a temperature lower than the predetermined temperature flowing from the upper portion of the first hot water storage tank 4 into the second hot water storage tank 5 as it is. Accordingly, it is possible to avoid the temperature of the water (hot water) W that is extracted from the upper portion of the second hot water storage tank 5 falling below the above predetermined temperature.

Further, it is possible to cause the water W from the recycle line 23 to collide with the facing direction regulation portion 53 and diffuse in the first hot water storage tank 4. Accordingly, the water W from the recycle line can be re-heated in the first hot water storage tank 4 after the temperature of the water W has fallen below a predetermined temperature.

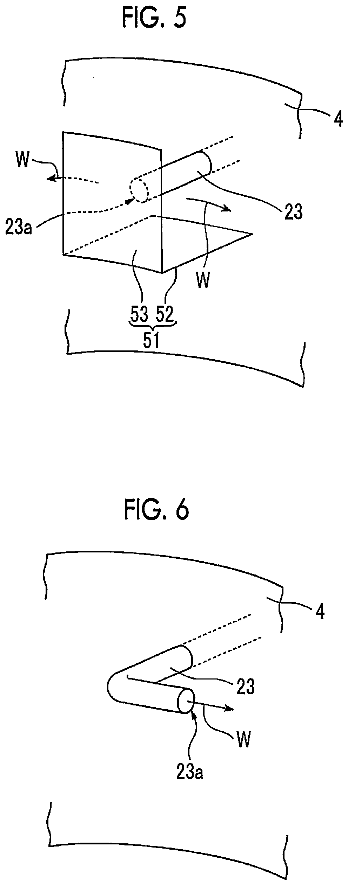

In the present embodiment, the height direction regulation portion 52 may be provided only below the opening portion 23a of the recycle line 23 as illustrated in Fig. 5. In addition, the height direction regulation portion 52 may be provided only above the opening portion 23a unlike in the case of Fig. 5. In other words, the flow regulation member 51 may be L-shaped in cross section.

Further, in the present embodiment, effects similar to those of the flow regulation member 51 can be obtained even when the tip of the recycle line 23, which is a pipeline, is bent into an L shape as illustrated in Fig. 6.

### [Third Embodiment]

Next, a water heating device 1B of a third embodiment of the present invention will be described. In the following description of the third embodiment, parts identical to those of the first and second embodiments are denoted by the same reference numerals so that the same description is not repeated. Of the configurations of the second embodiment, the second heat exchange part 3, the third hot water storage tank 6, the switching valve 42, and the valve control unit 43 are not provided in the third embodiment.

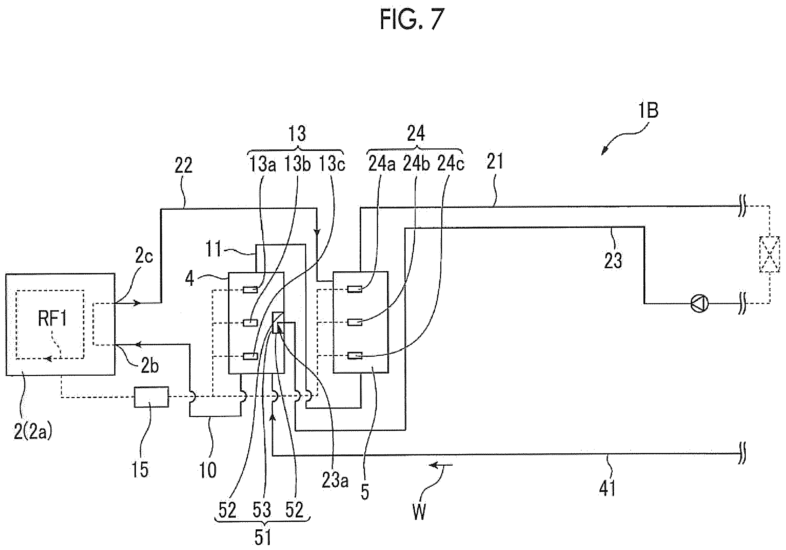

In other words, the water heating device 1B is provided with the first heat exchange part 2, the first hot water storage tank 4, the second hot water storage tank 5, the recycle line 23, and the flow regulation member 51 as illustrated in Fig. 7.

According to the water heating device 1B of the present embodiment, it is possible to prevent the water W from the recycle line 23 that is higher in temperature than the water W from the external supply source from being directly introduced into the inlet 2b of the first heat exchange part 2, and thus it is possible to avoid a decline in the COP of the first heat exchange part 2.

In addition, it is possible to avoid the water W from the recycle line 23 that has a temperature lower than the predetermined temperature flowing from the upper portion of the first hot water storage tank 4 into the second hot water storage tank 5 as it is. Accordingly, it is possible to avoid the temperature of the water (hot water) W that is extracted from the upper portion of the second hot water storage tank 5 falling below the above predetermined temperature.

Further, it is possible to cause the water W from the recycle line 23 to collide with the facing direction regulation portion 53 and diffuse in the first hot water storage tank 4. Accordingly, the water W from the recycle line 23 can be re-heated in the first hot water storage tank 4 after the temperature of the water W has fallen below a predetermined temperature.

Although embodiments of the present invention have been described in detail with reference to the drawings, the configurations of each embodiment, combinations of the configurations, and the like are examples, and addition, omission, substitution, and other changes in terms of configuration are possible without departing from the spirit of the present invention. The present invention is not limited by the embodiments. The present invention is limited only by the claims.

For example, the switching valve 42 may be manually operated irrespective of the valve control unit 43.

### Industrial Applicability

According to the heating device and the heating method described above, it is possible to achieve efficiency enhancement while obtaining a heating target liquid that has a predetermined temperature.

### Reference Signs List

1, 1A, 1B Water heating device (heating device)
2 First heat exchange part
2a First refrigerant circuit
2b Inlet
2c Outlet
3 Second heat exchange part
3a Second refrigerant circuit
3b Solar collector
3c Piping
4 First hot water storage tank (first storage tank)
5 Second hot water storage tank (second storage tank)
6 Third hot water storage tank (third storage tank)
10 First outlet pipe
11 First connection pipe
13 First temperature sensor
13a Upper first temperature sensor
13b Middle first temperature sensor
13c Lower first temperature sensor
15 Operation control unit
21 Water intake pipe
22 Second inlet pipe
23 Recycle line
23a Opening portion
24 Second temperature sensor
24a Upper second temperature sensor
24b Middle second temperature sensor
24c Lower second temperature sensor
31 Third inlet pipe
32 Second connection pipe
33 Third temperature sensor
41 Supply pipe
42 Switching valve
43 Valve control unit
51 Flow regulation member
52 Height direction regulation portion
53 Facing direction regulation portion
60 (60a, 60b, 60c, 60d, 60e) Hot water storage amount detection sensor
W Water (heating target liquid)
RF1 First refrigerant
RF2 Second refrigerant

## Claims

1. A heating device comprising:
a first heat exchange part including a first refrigerant circuit in which CO₂ as a first refrigerant circulates while repeating condensation and evaporation, heating a heating target liquid introduced from an inlet, and discharging the heating target liquid from an outlet;
a first storage tank storing the heating target liquid and having a lower portion connected to the inlet of the first heat exchange part;
a second storage tank storing the heating target liquid, having a lower portion connected to an upper portion of the first storage tank, having an upper portion connected to the outlet of the first heat exchange part, and allowing the heating target liquid having a predetermined temperature to be extracted from the upper portion;
a third storage tank storing the heating target liquid and having an upper portion connected to the second storage tank;
a second heat exchange part provided in parallel to the first heat exchange part, including a second refrigerant circuit in which a second refrigerant circulates, and heating the heating target liquid in the third storage tank;
a switching valve capable of introducing the heating target liquid from an outside into the lower portion of the first storage tank or a lower portion of the third storage tank; and
a valve control unit operating the switching valve such that the heating target liquid from the outside is introduced into the third storage tank when the temperature of the heating target liquid in the upper portion of the third storage tank is equal to or higher than the predetermined temperature and the heating target liquid from the outside is introduced into the first storage tank when the temperature of the heating target liquid in the upper portion of the third storage tank is lower than the predetermined temperature.

2. The heating device according to Claim 1, further comprising:
a first temperature sensor measuring the temperature of the heating target liquid in the first storage tank at a predetermined height position corresponding to the upper portion of the first storage tank;
a second temperature sensor measuring the temperature of the heating target liquid in the second storage tank at a predetermined height position in the upper portion of the second storage tank; and
an operation control unit controlling operation of the first heat exchange part in accordance with a measured value of the first temperature sensor such that a measured value of the second temperature sensor becomes equal to or greater than the predetermined temperature.

3. The heating device according to Claim 1 or 2, wherein the predetermined temperature is 60 degrees or more and 90 degrees or less.

4. The heating device according to any one of Claims 1 to 3, wherein the second heat exchange part has a solar collector and the heating target liquid in the third storage tank is heated by the solar collector.

5. The heating device according to any one of Claims 1 to 4, further comprising:
a recycle line connected to the first storage tank and allowing the heating target liquid to be introduced into the first storage tank after the heating target liquid is extracted from the second storage tank and used; and
a flow regulation member disposed above, below, or above and below an opening portion of the recycle line in the first storage tank and protruding from an inner surface of the first storage tank.

6. A heating device comprising:
a first heat exchange part including a first refrigerant circuit in which CO₂ as a first refrigerant circulates while repeating condensation and evaporation, heating a heating target liquid introduced from an inlet, and discharging the heating target liquid from an outlet;
a first storage tank storing the heating target liquid and having a lower portion connected to the inlet of the first heat exchange part;
a second storage tank storing the heating target liquid, having a lower portion connected to an upper portion of the first storage tank, having an upper portion connected to the outlet of the first heat exchange part, and allowing the heating target liquid having a predetermined temperature to be extracted from the upper portion;
a recycle line connected to the first storage tank and allowing the heating target liquid to be introduced into the first storage tank after the heating target liquid is extracted from the second storage tank and used; and
a flow regulation member disposed above, below, or above and below an opening portion of the recycle line in the first storage tank and protruding from an inner surface of the first storage tank.

7. The heating device according to Claim 5 or 6, wherein the flow regulation member includes
a height direction regulation portion disposed above, below, or above and below the opening portion, and
a facing direction regulation portion continuous with the height direction regulation portion inside the first storage tank and facing the opening portion.

8. A heating method for heating a heating target liquid with a device, the device including
a first heat exchange part including a first refrigerant circuit in which CO₂ as a first refrigerant circulates while repeating condensation and evaporation, heating the heating target liquid introduced from an inlet, and discharging the heating target liquid from an outlet,
a first storage tank storing the heating target liquid and having a lower portion connected to the inlet of the first heat exchange part,
a second storage tank storing the heating target liquid, having a lower portion connected to an upper portion of the first storage tank, having an upper portion connected to the outlet of the first heat exchange part, and allowing the heating target liquid having a predetermined temperature to be extracted from the upper portion,
a third storage tank storing the heating target liquid and having an upper portion connected to the second storage tank, and
a second heat exchange part provided in parallel to the first heat exchange part, including a second refrigerant circuit in which a second refrigerant circulates, and heating the heating target liquid in the third storage tank,
the heating method comprising:
a step of causing the heating target liquid from an outside to be introduced into the third storage tank when the temperature of the heating target liquid in the third storage tank is equal to or higher than the predetermined temperature and the heating target liquid from the outside to be introduced into the first storage tank when the temperature of the heating target liquid is lower than the predetermined temperature.

9. The heating method according to Claim 8, further comprising:
a step of controlling operation of the first heat exchange part in accordance with the temperature of the heating target liquid in the first storage tank at a predetermined height position in the upper portion of the first storage tank such that the temperature of the heating target liquid in the second storage tank becomes equal to or higher than the predetermined temperature.
